# EUROPEAN PATENT SPECIFICATION

(11) **EP 4 112 464 B1**
(45) Date of publication and mention of the grant of the patent: **01.01.2025**
(21) Application number: 21182001.4
(22) Date of filing: 28.06.2021
(51) Int. Cl.: B64D 11/04, B32B 5/24, B32B 27/06, B32B 27/28, B32B 27/30, B32B 27/32, B32B 27/36

(54) **GALLEY INSERTS**
BORDKÜCHENEINSÄTZE
INSERTS DE CHARIOT

(43) Date of publication of application: 04.01.2023
(73) Proprietor: B/E Aerospace, Inc., Winston Salem, NC 27105 (US)
(72) Inventor: EPSKAMP, Job, 3544MC Utrecht (NL)
(74) Representative: Dehns

(56) References cited:
- WO-A1-2020/214871
- US-A1- 2018 222 588
- US-A1- 2018 236 734

## Description

The present disclosure relates to galley inserts and a method of making a galley insert.

### Background

Many aircraft are provided with a galley where food and/or beverages may be stored and may be prepared for serving during flight. It is common for an aircraft galley to be designed with an initial frame or "monument" into which galley inserts may be added. Galley inserts include refrigerators, freezers, ovens, microwave ovens, beverage dispensers such as coffer makers, as well as storage cabinets. The galley inserts in a given aircraft may be made by manufacturers different from the aircraft manufacturer, and may be designed to meet certain size and weight limitations such that the galley inserts may be slotted into the frame in the galley. Further, the galley inserts in a given galley may be swapped out and replaced as desired during the service life of the aircraft, e.g. for repair of the inserts or for replacement with another insert. Replacement may be done, for example, with a replacement insert of the same type as the insert being replaced, or with a different type of insert (e.g. swapping a refrigerator insert with an oven insert).

Such conventional galley inserts have generally been considered satisfactory for their intended purpose however there is a need for improved inserts. US 2018/222588 relates to a galley monument with a charging station. WO 2020/214871 relates to composite sandwich structures.

### Summary

According to a first aspect, there is provided a galley insert comprising: a housing; and a door; wherein the housing made from a first material, wherein the first material comprises: a first layer of continuous-fibre reinforced thermoplastic, CFRT, a second layer of CFRT, and a foam core arranged between the first and second layers of CFRT, wherein the second layer forms an outermost surface of the housing.

The door is made from the first material, wherein the second layer forms an outermost surface of the door.

The door may comprise a display, and/or a handle, and/or a vent for allowing airflow through door.

The galley insert may be one of: an oven, a refrigerator, a beverage maker, and a cupboard.

The first material may have a thickness of less than five millimetres.

The fibres of the CFRT may be selected from the group of: glass fibres, metal fibres, aramid fibres, and carbon fibres.

The thermoplastic of the CFRT may be selected from the group of: polyetheimide (PEI), polysulphone (PS), polyethersulphone (PES), polyphenylsulphone (PPSU), polyetheretherketone (PEEK), polyvinylchloride (PVC), polypropelene (PP), polycarbonate (PC), and polyethylene (PE) and combinations thereof.

The foam core may be made from a thermoplastic selected from the group of: polyetheimide (PEI), polysulphone (PS), polyethersulphone (PES), polyphenylsulphone (PPSU), polyetheretherketone (PEEK), polyvinylchloride (PVC), polypropelene (PP), polycarbonate (PC), and polyethylene (PE) and combinations thereof.

The housing may comprise a first sidewall, a second sidewall, opposite the first sidewall, a top wall and a bottom wall, and a rear wall, wherein each of the top surface, bottom surface, and first and second side walls do not include one or more guide strips for positioning the galley insert relative to a frame.

According to a second aspect, there is provided an aircraft comprising: a galley; and at least one galley insert arranged in the galley; wherein the galley insert is a galley insert according to the first aspect.

According to a third aspect, there is provided a method of making a galley insert, the method comprising: forming a housing for the galley insert from a first material, wherein the first material comprises: a first layer of continuous-fibre reinforced thermoplastic, CFRT, a second layer of CFRT, and a foam core arranged between the first and second layers of CFRT, wherein the second layer forms an outermost surface of the housing; and connecting a door to the housing to form the galley insert.

The method may comprise a step of selecting the fibres of the CFRT from the group of: glass fibres, metal fibres, aramid fibres, and carbon fibres.

The method may comprise a step of selecting the thermoplastic of the CFRT from the group of: polyetheimide (PEI), polysulphone (PS), polyethersulphone (PES), polyphenylsulphone (PPSU), polyetheretherketone (PEEK), polyvinylchloride (PVC), polypropelene (PP), polycarbonate (PC), and polyethylene (PE) and combinations thereof.

The method may comprise a step of selecting a foam of the foam core from the group of: polyetheimide (PEI), polysulphone (PS), polyethersulphone (PES), polyphenylsulphone (PPSU), polyetheretherketone (PEEK), polyvinylchloride (PVC), polypropelene (PP), polycarbonate (PC), and polyethylene (PE) and combinations thereof.

The housing and door together may define an interior space of the galley insert, wherein the method may then further comprise a step of installing one or more components in the interior space, wherein the one or more components include any of: a heating element, a light, a refrigeration circuit, and a shelf.

### Description of the Figures

Certain embodiments of the present disclosure will now be described in greater detail by way of example only and with reference to the accompanying drawings in which:
Figure 1 shows an aircraft galley having multiple galley inserts;
Figure 2 shows a galley insert having a door and a housing;
Figure 3 shows a cross-section of a material for the housing; and
Figure 4 shows a flowchart of a method of making a galley insert.

### Detailed Description

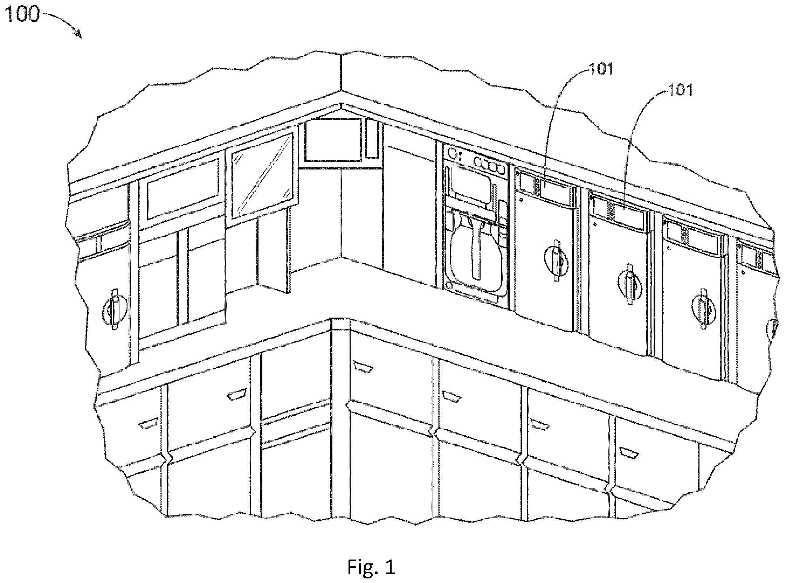

Figure 1 shows a perspective view of an aircraft galley 100 having a plurality of galley inserts 101 installed therein. Each galley insert 101 may be one of: an oven, a refrigerator, a freezer, a beverage maker, or a storage cupboard. A storage cupboard may contain one or more shelves. In this way, a given aircraft may have a galley 100 that has a desired number of ovens, refrigerators, freezers, beverage makers, and storage cupboards. In an aircraft where, for example, hot food will not be served during flight, the galley may be fitted with more refrigerators and beverage makers for storing and preparing beverages. Other aircraft may have one or more galley inserts 101 that are an oven or microwave oven, for preparing hot food for passengers and/or crew.

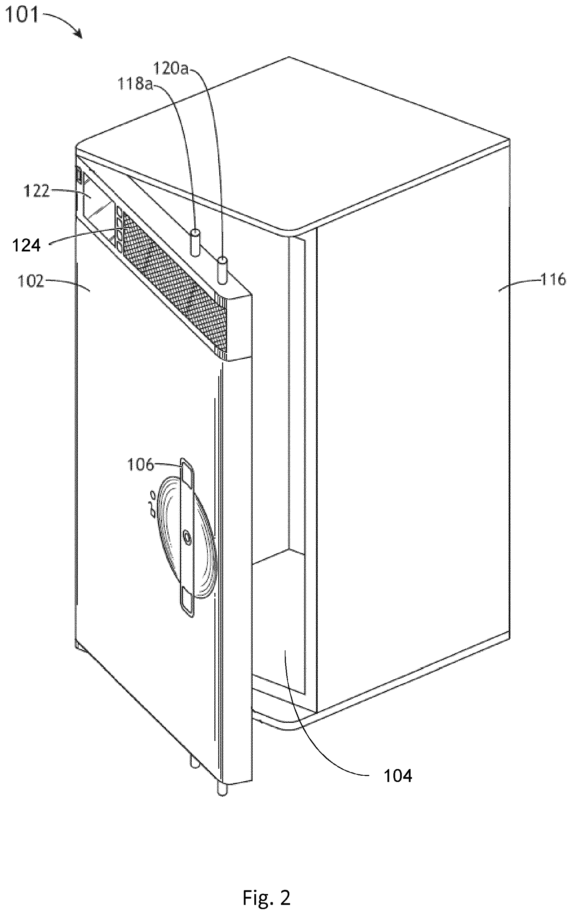

Figure 2 shows a perspective view of a galley insert 101. The galley insert 101 has a door 102 allowing access to an interior space 104 of the galley insert 101. A handle 106 is provided for opening and closing the door 102, and the handle 106 may be connected to one or more latches 118a,120a for holding the door 106 closed. The door 106 is mounted to a housing 116 of the galley insert 101. The door 106 may be considered to define a front of the galley insert 101, while the housing 116 provides the other outermost surfaces of the galley insert 101, including: a top wall, a bottom wall, left and right sidewalls, and the rear wall of the galley insert 101. The housing 116 and door 102 together define an interior space 104 of the galley insert 101.

The door 102 has a display 122 and an air vent 124. The latches 118a, 120a may be retractable into the body of the door 102 when the handle 106 is turned. The latches 1 18,120a may engage with corresponding recesses in the housing 116 to hold the door 102 shut.

The housing 116 and door 102 may thus define the outer extent of the galley insert 101, such that the galley insert 101 may be handled as a single distinct unit, and may be installed as a single unit in a frame or monument in the aircraft galley 100. Similarly, the galley insert 101 may be removed as a single unit from the galley 101.

The interior space 104 may store different components of the galley insert 101, depending on the type of galley insert 101. For example, a refrigerator galley insert 101 may have a refrigeration circuit and cooled compartment in the interior space 104, said refrigeration circuit for cooling the compartment and any items therein (e.g. food or beverages). By way of another example, an oven galley insert 101 may have heating elements and a heated compartment arranged in the interior space 104, said heating elements for heating the compartment and any items therein. In both of the aforementioned cases, the door 102 may allow a user to access the heated/cooled interior space 104.

The housing 116 may have one or more ports (not shown) to allow a power cable and/or a fluid pipe to connect components within the interior space 104 of the galley insert 101 to a power supply or a fluid supply, as appropriate, that is provided in the galley 100. Such ports will typically be in the rear of the galley insert 101, i.e. on a side opposite the door 102.

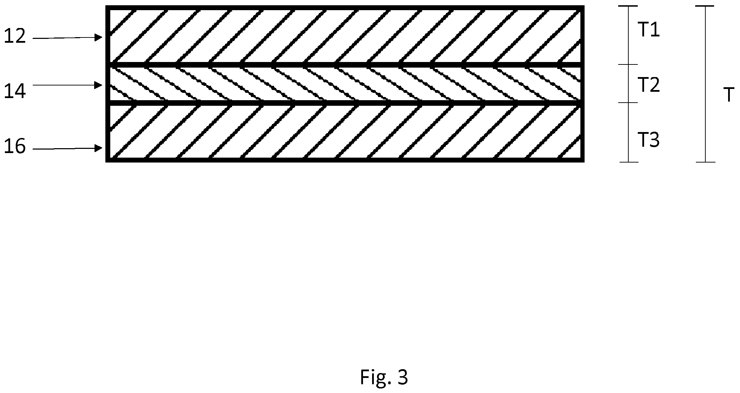

Figure 3 shows a cross-section of a material 10 used to form the housing 116. The material 10 may be used to form all, or substantially all, of the housing 116. The material 10 is also used to form the majority of the door 102, all parts except for e.g. the latches 118a,120a, the handle 106, the display 122, a hinge connecting the door 102 to the housing 116, and/or the vent 124.

The material 10 comprises two layers 12, 16, and a core 14. The first layer 12 is a continuous-fibre reinforced thermoplastic material (hereafter referred to as a "CFRT material"). The second layer 16 is a CFRT material. The core 14 is a foam material and is disposed between the first layer 12 and the second layer 16. In use, the second layer 16 forms the outermost surface of the housing 116. The first layer 12 forms an interior surface of the housing 116. The interior surface of the housing 116, in conjunction with an interior surface of the door 112, when closed, defines the interior space 104 of the galley insert 101.

The core 14 is enclosed within the first 12 and second 16 layers and is not accessible without cutting through or otherwise removing one of the layers 12,16.

A CFRT material will typically substantially or entirely consists of: continuous fibres of a strong material encased in a thermoplastic resin. The resin holds the otherwise-flexible fibres in place and the fibres, in turn, provide substantial strength to the overall material.

Typically, the fibres may be arranged in a mold in a desired shape or format, such as a woven or non-woven fabric, and then the fibres are impregnated with a liquid thermoplastic resin under pressure. During formation, the liquid resin flows around and between the fibres. The liquid thermoplastic is then cooled, or allowed to cool, until it solidifies. The resulting part made from the CFRT material may then be removed from the mold.

The first layer 12 may use the same material for the fibres as used in the second layer 16, or different fibre materials may be used.

The first layer 12 may use the same thermoplastic as used in the second layer 16, or different thermoplastics may be used.

The foam material for the core 14 may be formed from a thermoplastic that is swelled or otherwise caused to foam.

Suitable thermoplastics for the foam include polyetheimide (PEI), polysulphone (PS), polyethersulphone (PES), polyphenylsulphone (PPSU), polyetheretherketone (PEEK), polyvinylchloride (PVC), polypropelene (PP), polycarbonate (PC), and polyethylene (PE) and combinations thereof. These thermoplastics may be made into a foam using an appropriate swelling agent, or by gas injection.

Suitable fibres for the first layer 16 and for the second layer 12 include: glass fibres, metal fibres, aramid fibres (e.g. Kevlar^{™}), and carbon fibres.

Suitable thermoplastics for the CFRT include: PEI, PPSU, PS, PEEK, PC, PES, PU, PC, or PP.

The material 10 may comprise further components, including one or more of: reinforcing fibres within the foam material of the core 14; reinforcing particles within the foam material of the core 14; a glue layer or a surface treatment to improve bonding between the first layer 12 and the core 14 and/or between the core 14 and the second layer 16; and one or more intermediate layers of CFRT material between the first 12 and second 16 layers.

The choice of foam material may be driven by thermal insulation properties. The choice of material for the fibres may be driven by strength and stiffness requirements for the layer. The choice of thermoplastic may be driven by the intended operating temperatures of the galley insert 101.

The specific choices made for the first layer 12, second layer 16, and core 14, may depend on the intended type of galley insert 101.

For example, for a galley insert 101 that is an oven, it may be important to have a more-heat resistant first layer 12 (i.e. on the side of the housing facing the interior space 104) compared to a galley insert 101 that is not an oven or microwave oven. Similarly, in this oven example, the foam material for the core 14 may be chosen on the basis of its insulation properties as compared to a galley insert 101 that is not an oven or microwave oven.

The choice of thermoplastic for the second layer 16, which forms an outermost surface of the housing 116, may for example be selected based on scratch resistance or ease-of-colouration, The specific combination of thermoplastic and fibres used in the (inner) first layer 12 may be different from the specific combination of the (outer) second layer 16 based on the different requirements for these two layers.

The material 10 may have an overall thickness T that is equal to the sum of a thickness T1 of the first layer 12, a thickness T2 of the core 14, and a thickness T3 of the second layer 16. In some embodiments, the overall thickness T is less than five millimeters (5 mm).

Galley inserts 101 are typically designed to fit into a slot in the frame in the galley 100 and therefore these galley inserts 101 must have predefined outer measurements. That is, for example, a galley insert 101 may be designed to have a predefined length from the front of the door 102 to the outermost extent of the rear wall of the housing 116. Similarly, the galley insert 101 may have a predefined width between the outer side of the left side way and the outer side of the right sidewall.

As such, having a thinner material 10 for the housing 116 may allow for a larger interior space 104 for a given exterior size of galley insert 101. Of course, a thinner section material will typically be weaker and/or provide less thermal insulation compared to a thicker section of the same material. Thus, there is a balance to be struck between providing a larger interior space 104 within the housing 116 against the need for sufficient strength, stiffness, and thermal insulation provided by the housing 116.

The use of CFRT layers 12,16 may provide a number of advantages over traditional housings for galley inserts. Firstly, CFRT layers may be made very strong, and can be capable of producing housings 116 (and doors 102) which are stronger and lighter than those of traditional galley inserts, such as those made of metals such as aluminium. Additionally, CFRT layers may be pre-coloured. This may allow for increased durability and life span of the galley inserts, as a pre-coloured CFRT layer will be more resistant to scratches and sink marks, compared to e.g. a painted galley insert. There is no single, thin, layer of paint or dye that defines the colour of the galley insert 101, as has previously been the case in traditional galley inserts. Galley inserts 101 formed with the material 10 having pre-coloured CFRT layers (12 and/or 16) may exhibit heightened scratch resistance. Further, the cost to produce and maintain such galley inserts 101 may be reduced as the need for paint and paint repairs may be decreased.

In addition to being stronger and lighter than traditional oven galley inserts, galley inserts 101 produced using the material 10 for the housing 116 (and for the door 102 as well) may provide thermal insulation advantages over traditional oven doors. Due to the bonded, sandwiched construction of the material shown in FIG. 3, insulation may be increased throughout the oven. In effect, this may lead to lower temperatures at the external surface of the oven galley insert 101. Not only do lower external surface temperatures lead to safer ovens, but it also leads to heat conservation and energy savings. Improved insulation at a rear of the galley insert and at the top, bottom, and left and right sides may also reduce undesirable heat transfer to adjacent galley units 101. Thus, for example, an oven galley insert may be arranged adjacent to a refrigerator galley insert or a cupboard galley insert, and the improved insulation offered by the material may reduce undesirable heat transfer from the oven galley insert to goods stored in the refrigerator galley insert/cupboard galley insert.

Saving weight is also a significant factor in the aircraft industry. Any weight savings in the production of aircraft components or equipment may lead to improved aircraft fuel efficiency. The material 10 described hereinabove for the housing 116 may be lighter than comparably-strong metal housing, which may allow the overall galley insert 101 to be significantly lighter than known designs of galley insert having a metal housing.

As the material 10 may have greater scratch resistance compared to known designs where a metal housing is painted, the housing 116 may have no slide strips. Slide strips are used on metal-housing galley inserts to guide the galley insert into its space in the frame or monument so as to avoid scratching the painted surface of the galley insert. These guide strips help avoid scratching paint on the metal housing of the galley insert as it is inserted or removed. These guide strips add weight and take up space within the galley. Eliminating the need for guide strips may therefore save weight and allow more efficient use of the available space. Thus, as the housing 116 of the present disclosure does not require slide strips due to its scratch resistance, further weight savings may be realised.

The housing 116, as shown in Figure 2, has a three-dimensional shape. This may be made by joining together a plurality of panels of the material 10. Panels of the material 10 may be joined to one another by a variety of methods including: welding, gluing, or pressing. Welding may include ultrasonic welding or infrared welding for example.

Alternatively, a single panel of the material 10 may be pressed into the desired shape for the housing 116. Such pressing may occur alongside heating (either local heating at bend-points or general heating of the material 10) near a glass transition temperature the thermoplastic, or one of the thermoplastics, used in the material 10.

Either after or before forming the housing 116, one or more holes may be made in the material 10, so as to allow access through the housing 116 to the interior space 104. Such holes may allow a power cable and/or a fluid pipe to connect from the galley 100 to components (e.g. heating elements, refrigeration components, a light source etc.) inside the housing 116. The fluid pipe may be to attach to a water supply or to a gas supply, such as an air supply.

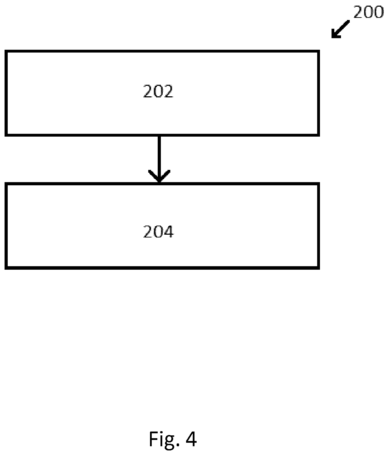

Figure 4 shows a method 200 of making a galley insert. The method includes, at step 202, forming a housing 116 from the first material 10. At step 204, the method includes connecting a door 102 to the housing to form a galley insert 101. The method may further comprise adding one or more components to the interior space 104 defined by the housing 116 and the door 102. The components may be one or more heating elements, one or more lights, a refrigeration circuit, and/or one or more shelves.

### Reference Numerals

- 12: first layer
- 14: core
- 16: second layer
- 100: galley
- 101: galley insert
- 102: door (of galley insert)
- 104: interior space (of galley insert)
- 106: handle (of door 102)
- 116: housing (of galley insert)
- 118a, 120a: latches (of door 102)
- 122: display
- 124: vent
- 200: method of making a galley insert
- 202: step of forming a housing
- 204: step of connecting a door
- T1: thickness of first layer 12
- T2: thickness of core 14
- T3: thickness of second layer 16
- T: overall thickness of material 10

## Claims

1. A galley insert (101) comprising:
a housing (116); and
a door (102);
wherein the housing is made from a first material (10), **characterized in that** the first material comprises:
a first layer (12) of continuous-fibre reinforced thermoplastic, CFRT, a second layer (16) of CFRT, and a foam core (14) arranged between the first and second layers of CFRT, wherein the second layer forms an outermost surface of the housing (116); and
the door (102) is made from the first material, and wherein the second layer forms an outermost surface of the door.

2. The galley insert of claim 1, wherein the door (102) comprises a display (122), and/or a handle (106), and/or a vent (124) for allowing airflow through door.

3. The galley insert of any preceding claim, wherein the galley insert is one of: an oven, a refrigerator, a beverage maker, and a cupboard.

4. The galley insert of any preceding claim, wherein the first material has a thickness of less than five millimetres.

5. The galley insert of any preceding claim, wherein the fibres of the CFRT are selected from the group of: glass fibres, metal fibres, aramid fibres, and carbon fibres.

6. The galley insert of any preceding claim, wherein the thermoplastic of the CFRT is selected from the group of: polyetheimide (PEI), polysulphone (PS), polyethersulphone (PES), polyphenylsulphone (PPSU), polyetheretherketone (PEEK), polyvinylchloride (PVC), polypropelene (PP), polycarbonate (PC), and polyethylene (PE) and combinations thereof.

7. The galley insert of any preceding claim, wherein the foam core is made from a thermoplastic selected from the group of: polyetheimide (PEI), polysulphone (PS), polyethersulphone (PES), polyphenylsulphone (PPSU), polyetheretherketone (PEEK), polyvinylchloride (PVC), polypropelene (PP), polycarbonate (PC), and polyethylene (PE) and combinations thereof.

8. The galley insert of any preceding claim, wherein the housing (116) comprises a first sidewall, a second sidewall, opposite the first sidewall, a top wall and a bottom wall, and a rear wall, wherein each of the top surface, bottom surface, and first and second side walls do not include one or more guide strips for positioning the galley insert relative to a frame.

9. An aircraft comprising:
a galley (100); and
at least one galley insert (101) arranged in the galley;
wherein the galley insert is a galley insert according to any preceding claim.

10. A method of making a galley insert (101), the method comprising:
forming a housing (116) for the galley insert from a first material (10), wherein the first material comprises:
a first layer (12) of continuous-fibre reinforced thermoplastic, CFRT, a second layer (16) of CFRT, and a foam core (14) arranged between the first and second layers of CFRT, wherein the second layer forms an outermost surface of the housing; and
connecting a door (102) to the housing to form the galley insert (101), wherein the door (102) is made from the first material, and wherein the second layer forms an outermost surface of the door.

11. The method of claim 10, comprising a step of selecting the fibres of the CFRT from the group of: glass fibres, metal fibres, aramid fibres, and carbon fibres.

12. The method of claim 10 or 11, comprising a step of selecting the thermoplastic of the CFRT from the group of: polyetheimide (PEI), polysulphone (PS), polyethersulphone (PES), polyphenylsulphone (PPSU), polyetheretherketone (PEEK), polyvinylchloride (PVC), polypropelene (PP), polycarbonate (PC), and polyethylene (PE) and combinations thereof.

13. The method of claim 10, 11, or 12, comprising a step of selecting a foam of the foam core from the group of: polyetheimide (PEI), polysulphone (PS), polyethersulphone (PES), polyphenylsulphone (PPSU), polyetheretherketone (PEEK), polyvinylchloride (PVC), polypropelene (PP), polycarbonate (PC), and polyethylene (PE) and combinations thereof.

14. The method of any of claims 10 to 12, wherein the housing (116) and door (102) together define an interior space (104) of the galley insert, wherein the method further comprises a step of installing one or more components in the interior space, wherein the one or more components include any of: a heating element, a light, a refrigeration circuit, and a shelf.

## Patentansprüche

1. Bordkücheneinsatz (101), umfassend:
ein Gehäuse (116); und
eine Tür (102);
wobei das Gehäuse aus einem ersten Material (10) hergestellt ist, **dadurch gekennzeichnet, dass** das erste Material Folgendes umfasst:
eine erste Schicht (12) aus endlosfaserverstärktem Thermoplast (continuous-fibre reinforced thermoplastic - CFRT), eine zweite Schicht (16) aus CFRT und einen Schaumkern (14), der zwischen der ersten und der zweiten Schicht aus CFRT angeordnet ist, wobei die zweite Schicht eine äußerste Fläche des Gehäuses (116) bildet; und
die Tür (102) aus dem ersten Material hergestellt ist, und wobei die zweite Schicht eine äußerste Fläche der Tür bildet.

2. Bordkücheneinsatz nach Anspruch 1, wobei die Tür (102) eine Anzeige (122) und/oder einen Griff (106) und/oder eine Entlüftung (124) zum Ermöglichen eines Luftstroms durch die Tür umfasst.

3. Bordkücheneinsatz nach einem der vorhergehenden Ansprüche, wobei der Bordkücheneinsatz eines der Folgenden ist: ein Ofen, ein Kühlschrank, ein Getränkeautomat und ein Schrank.

4. Bordkücheneinsatz nach einem der vorhergehenden Ansprüche, wobei das erste Material eine Dicke von weniger als fünf Millimetern aufweist.

5. Bordkücheneinsatz nach einem der vorhergehenden Ansprüche, wobei die Fasern des CFRT aus der folgenden Gruppe ausgewählt sind: Glasfasern, Metallfasern, Aramidfasern und Kohlenstofffasern.

6. Bordkücheneinsatz nach einem der vorhergehenden Ansprüche, wobei der Thermoplast des CFRT aus der folgenden Gruppe ausgewählt ist: Polyethylimid (PEI), Polysulfon (PS), Polyethersulfon (PES), Polyphenylsulfon (PPSU), Polyetheretherketon (PEEK), Polyvinylchlorid (PVC), Polypropylen (PP), Polycarbonat (PC) und Polyethylen (PE) und Kombinationen davon.

7. Bordkücheneinsatz nach einem der vorhergehenden Ansprüche, wobei der Schaumkern aus einem Thermoplast hergestellt ist, der aus der folgenden Gruppe ausgewählt ist: Polyethylimid (PEI), Polysulfon (PS), Polyethersulfon (PES), Polyphenylsulfon (PPSU), Polyetheretherketon (PEEK), Polyvinylchlorid (PVC), Polypropylen (PP), Polycarbonat (PC) und Polyethylen (PE) und Kombinationen davon.

8. Bordkücheneinsatz nach einem der vorhergehenden Ansprüche, wobei das Gehäuse (116) eine erste Seitenwand, eine der ersten Seitenwand gegenüberliegende zweite Seitenwand, eine obere Wand und eine untere Wand und eine Rückwand umfasst, wobei keine der oberen Fläche, der unteren Fläche und der ersten und der zweiten Seitenwand eine oder mehrere Führungsleisten zum Positionieren des Bordkücheneinsatzes relativ zu einem Rahmen beinhalten.

9. Flugzeug, umfassend:
eine Bordküche (100); und
mindestens einen in der Bordküche angeordneten Bordkücheneinsatz (101);
wobei der Bordkücheneinsatz ein Bordkücheneinsatz gemäß einem der vorhergehenden Ansprüche ist.

10. Verfahren zum Herstellen eines Bordkücheneinsatzes (101), wobei das Verfahren Folgendes umfasst:
Bilden eines Gehäuses (116) für den Bordkücheneinsatz aus einem ersten Material (10), wobei das erste Material Folgendes umfasst:
eine erste Schicht (12) aus endlosfaserverstärktem Thermoplast (CFRT), eine zweite Schicht (16) aus CFRT und einen Schaumkern (14), der zwischen der ersten und der zweiten Schicht aus CFRT angeordnet ist, wobei die zweite Schicht eine äußerste Fläche des Gehäuses bildet; und
Verbinden einer Tür (102) mit dem Gehäuse, um den Bordkücheneinsatz (101) zu bilden, wobei die Tür (102) aus dem ersten Material hergestellt ist und wobei die zweite Schicht eine äußerste Fläche der Tür bildet.

11. Verfahren nach Anspruch 10, umfassend einen Schritt des Auswählens der Fasern des CFRT aus der folgenden Gruppe: Glasfasern, Metallfasern, Aramidfasern und Kohlenstofffasern.

12. Verfahren nach Anspruch 10 oder 11, umfassend einen Schritt des Auswählens des Thermoplasts des CFRT aus der folgenden Gruppe: Polyethylimid (PEI), Polysulfon (PS), Polyethersulfon (PES), Polyphenylsulfon (PPSU), Polyetheretherketon (PEEK), Polyvinylchlorid (PVC), Polypropylen (PP), Polycarbonat (PC) und Polyethylen (PE) und Kombinationen davon.

13. Verfahren nach Anspruch 10, 11 oder 12, umfassend einen Schritt des Auswählens eines Schaums des Schaumkerns aus der folgenden Gruppe: Polyethylimid (PEI), Polysulfon (PS), Polyethersulfon (PES), Polyphenylsulfon (PPSU), Polyetheretherketon (PEEK), Polyvinylchlorid (PVC), Polypropylen (PP), Polycarbonat (PC) und Polyethylen (PE) und Kombinationen davon.

14. Verfahren nach einem der Ansprüche 10 bis 12, wobei das Gehäuse (116) und die Tür (102) zusammen einen Innenraum (104) des Bordkücheneinsatzes definieren, wobei das Verfahren ferner einen Schritt des Installierens einer oder mehrerer Komponenten in dem Innenraum umfasst, wobei die eine oder mehreren Komponenten beliebige der Folgenden beinhalten: ein Heizelement, eine Leuchte, einen Kühlkreislauf und ein Regal.

## Revendications

1. Insert de chariot (101) comprenant :
un boîtier (116) ; et
une porte (102) ;
dans lequel le boîtier est réalisé à partir d'un premier matériau (10), **caractérisé en ce que** le premier matériau comprend :
une première couche (12) de thermoplastique renforcée par des fibres continues, CFRT, une deuxième couche (16) de CFRT, et un noyau en mousse (14) disposé entre la première couche et la deuxième couche de CFRT, dans lequel la deuxième couche forme la surface la plus extérieure du boîtier (116) ; et
la porte (102) est réalisée à partir du premier matériau, et dans lequel la deuxième couche forme la surface la plus extérieure de la porte.

2. Insert de chariot selon la revendication 1, dans lequel la porte (102) comprend une vitrine (122) et/ou une poignée (106) et/ou un évent (124) pour permettre la circulation de l'air à travers la porte.

3. Insert de chariot selon une quelconque revendication précédente, dans lequel l'insert de chariot est l'un des éléments suivants : un four, un réfrigérateur, un appareil à boissons et un placard.

4. Insert de chariot selon une quelconque revendication précédente, dans lequel le premier matériau a une épaisseur inférieure à cinq millimètres.

5. Insert de chariot selon une quelconque revendication précédente, dans lequel les fibres du CFRT sont choisies dans le groupe comprenant : les fibres de verre, les fibres métalliques, les fibres d'aramide et les fibres de carbone.

6. Insert de chariot selon une quelconque revendication précédente, dans lequel le thermoplastique du CFRT est choisi dans le groupe comprenant : le polyétherimide (PEI), le polysulfone (PS), le polyéthersulfone (PES), le polyphénylsulfone (PPSU), le polyétheréthercétone (PEEK), le polychlorure de vinyle (PVC), le polypropylène (PP), le polycarbonate (PC) et le polyéthylène (PE) ainsi que leurs combinaisons.

7. Insert de chariot selon une quelconque revendication précédente, dans lequel le noyau en mousse est réalisé à partir d'un thermoplastique choisi dans le groupe comprenant : le polyétherimide (PEI), le polysulfone (PS), le polyéthersulfone (PES), le polyphénylsulfone (PPSU), le polyétheréthercétone (PEEK), le polychlorure de vinyle (PVC), le polypropylène (PP), le polycarbonate (PC) et le polyéthylène (PE) ainsi que leurs combinaisons.

8. Insert de chariot selon une quelconque revendication précédente, dans lequel le boîtier (116) comprend une première paroi latérale, une deuxième paroi latérale, opposée à la première paroi latérale, une paroi supérieure et une paroi inférieure, ainsi qu'une paroi arrière, dans lequel chacune de la surface supérieure, de la surface inférieure et des première et deuxième parois latérales ne comportent pas une ou plusieurs bandes de guidage pour positionner l'insert de chariot par rapport à un cadre.

9. Aéronef comprenant :
un chariot(100) ; et
au moins un insert de chariot (101) disposé dans le chariot ;
dans lequel l'insert de chariot est un insert de chariot selon une quelconque revendication précédente.

10. Procédé de fabrication d'un insert de chariot (101), le procédé comprenant :
la formation d'un boîtier (116) pour l'insert de chariot à partir d'un premier matériau (10), dans lequel le premier matériau comprend :
une première couche (12) de thermoplastique renforcée par des fibres continues, CFRT, une deuxième couche (16) de CFRT, et un noyau en mousse (14) disposé entre la première couche et la deuxième couche de CFRT, dans laquelle la deuxième couche forme la surface la plus extérieure du boîtier; et
le raccordement d'une porte (102) au boîtier pour former l'insert de chariot (101), dans lequel la porte (102) est réalisée à partir du premier matériau, et dans lequel la deuxième couche forme la surface la plus extérieure de la porte.

11. Procédé selon la revendication 10, comprenant une étape de sélection des fibres du CFRT dans le groupe comprenant : les fibres de verre, les fibres métalliques, les fibres d'aramide et les fibres de carbone.

12. Procédé selon les revendications 10 ou 11, comprenant une étape de sélection du thermoplastique du CFRT choisi dans le groupe comprenant : le polyétherimide (PEI), le polysulfone (PS), le polyéthersulfone (PES), le polyphénylsulfone (PPSU), le polyétheréthercétone (PEEK), le polychlorure de vinyle (PVC), le polypropylène (PP), le polycarbonate (PC) et le polyéthylène (PE) ainsi que leurs combinaisons.

13. Procédé selon les revendications 10, 11 ou 12 , comprenant une étape de sélection d'une mousse du noyau en mousse dans le groupe comprenant : le polyétherimide (PEI), le polysulfone (PS), le polyéthersulfone (PES), le polyphénylsulfone (PPSU), le polyétheréthercétone (PEEK), le polychlorure de vinyle (PVC), le polypropylène (PP), le polycarbonate (PC) et le polyéthylène (PE) ainsi que leurs combinaisons.

14. Procédé selon l'une quelconque des revendications 10 à 12, dans lequel le boîtier (116) et la porte (102) définissent ensemble un espace intérieur (104) de l'insert de chariot, dans lequel le procédé comprend également une étape d'installation d'un ou de plusieurs composants dans l'espace intérieur, dans lequel l'un ou les plusieurs composants comportent l'un quelconque des éléments suivants : un élément de chauffage, une lumière, un circuit de réfrigération et une étagère.
